# EUROPEAN PATENT SPECIFICATION

(11) **EP 2 186 613 B1**
(45) Date of publication and mention of the grant of the patent: **29.05.2013**
(21) Application number: 08169234.5
(22) Date of filing: 17.11.2008
(51) Int. Cl.: B29B 13/06, F26B 21/12, F26B 17/12, F26B 9/06

(54) **High-efficiency system for dehumidifying and/or drying plastic materials**
Hocheffiziente Anlage zum Entfeuchten und/oder Trocknen von Kunststoffmaterialien
Système à haut rendement pour déshumidifier et/ou sécher des matières plastiques

(43) Date of publication of application: 19.05.2010
(73) Proprietor: Piovan S.P.A., 30036 Santa Maria Di Sala (IT)
(72) Inventor: Bellio, Enrico, 30036, S.MARIA DI SALA (VE) (IT)
(74) Representative: Crugnola, Pietro

(56) References cited:
- EP-A- 1 650 517
- DE-A1- 19 719 483
- DE-U1- 29 621 313
- US-A1- 2005 091 872
- US-A1- 2006 168 843

## Description

The present invention concerns the systems for dehumidifying and/or drying plastic material, in particular granulated material, and it concerns a new high energy efficiency system for dehumidifying and/or drying plastic material, provided with an electronic unit for controlling process parameters. Systems are known for dehumidifying and/or drying plastic material which is distributed and used in the form of granules or scales or the like, and wherein these granules or scales are transformed in finished or semifinished products through processing methods like heating, casting and moulding or extrusion.

The dehumidification and/or drying process is necessary and of fundamental importance, since it avoids the formation of bubbles and cavities in the molten plastic material due to the presence of humidity in the mass of granules.

It is therefore necessary to dry and dehumidify the granules before melting and moulding/extrusion and to adopt particular measures intended to maintain a low humidity rate in the material even during the storage and transport stages.

The dehumidification and/or drying systems for plastic material, in particular for granulated plastic material, used at present comprise a "drier", that is, a generator of process fluid that is dehumidified, heated and introduced at a specific flow rate into drying hoppers that contain the plastic material, each hopper being dedicated to a specific processing machine. Said hoppers, in which a considerable quantity of plastic granules is introduced, are duly sealed and said dry and hot process fluid is introduced therein, generally in countercurrent to the flow of granules, in order to obtain maximum process efficiency.

Various gaseous fluids or mixtures can be used in the drying/heating process but air results to be the most economic and most used means.

Usually, hot dry air is introduced in the lower part of the hopper and successively recovered through the upper part of the hopper to be conveyed to the dry air generation and treatment unit.

The granules of plastic material are then preheated to a high temperature and conveyed from the drying hopper directly into the processing/moulding machine.

Said driers or generators of process fluid, generally dry air, thus supply a certain quantity of air, whose humidity rate is predetermined and sufficiently low, said air being then heated to a temperature that changes depending on the polymer, with the double function of dehumidifying and heating the plastic material.

For example, for the production of objects in a plastic material like PET, the granules are indicatively brought from the ambient temperature, 20~30°C, to the drying temperature, approximately 180~200°C, during a typical time interval of 6~8 hours, in such a way as to eliminate any humidity from the plastic granules and to heat them for the successive moulding process.

The degree of humidity of the process fluid is determined through the dew point. In general, for drying plastic materials a dew point in the order of - 40~50°C is required.

Depending on the application, the dry air used for treating the material can be reused or not in a closed circuit. In general, considering the high degree of drying required, the air is recirculated in a closed circuit.

The heating and dehumidification of the process fluid may require considerable quantities of energy. As is known, said energy is proportional to the fluid flow rate conveyed into the drying hoppers. In order to reduce to a minimum the energy consumption of a drying and/or dehumidification system, it is therefore necessary to use hourly process fluid flow rates that are exactly proportional to the hourly flow rates of the plastic material drawn from the drying hoppers by the processing machines.

According to the current state of the art of drying and/or dehumidification systems for granules of plastic material, hereinafter called dehumidifiers for the sake of simplicity, in order to reduce energy consumption the operator inputs the hourly flow rate of the material drawn from the drying hopper by the processing machine in the control system of the dehumidifier, hereinafter called controller.

According to the value input by the operator, if the type of resin present in the hopper is known, the controller determines the flow rate of the material flowing out of the generator of process fluid via suitable means, for example inverters, bypass valves, stepless positioning valves, etc, in such a way as to fix the proportion between the material drawn and the flow rate of the process fluid.

Said air flow rate is calculated according to tables that are stored in the electronic control unit of the dehumidifier for each type of plastic material according to the quantity of material drawn from the drying hopper per unit of time.

Said air flow rate is often the result of an open chain partialization obtained via stepless positioning valves, bypass valves and/or through a change in the set point of the blower/inverter unit belonging to the process fluid generator. As is known to the experts in the field of automatic controls, this approach guarantees neither the consistency nor the exact value of the air flow rate, that is, it cannot guarantee the repeatability of the ratio between the degree of partialization of the adjusting means, for example valve, set-point, inverter, and the actual value of the fluid flow rate obtained following said partialization.

Said value of the process fluid flow rate, in fact, is strictly connected to variables that cannot be controlled present in the dehumidification system, like the density/temperature of the fluid flowing into the generator, the thermodynamic conditions of the ambient air, load losses, reduced tightness of the process fluid circuit, filter clogging, etc.

The main drawbacks posed by the current state of the art are the following:
1) In the actual operating conditions, the actual quantity of material drawn from the drying hopper isn't constant but variable, for example due to variations in the production conditions of the processing machines. The hourly flow rate of process fluid is proportional to the rated drawing quantity and not to the actual quantity of material drawn, so that it occurs that the plastic granule can be over-dehumidified if the value of the actual quantity of material drawn is lower than the rated drawing quantity set by the operator in the dehumidifier controller, or under-dehumidified if the value of the actual quantity of material drawn is higher than the rated drawing quantity set by the operator in the controller.
   In the first case, there will be an excessive energy consumption in addition to a probable permanent degradation of the chemical-physical characteristics of the plastic material, while in the second case there will be problems in the processing stage, like for example during injection moulding or extrusion or other processes, said problems being due to the use of a plastic material that hasn't been correctly dried/dehumidified.
2) The inability to precisely adjust, at any moment, the actual quantity of process fluid introduced in the circuit by the generator causes the system to fail to respect the conditions of minimum energy absorption, with the same degree of dehumidification of the plastic material contained in the dehumidification hopper, since it is impossible to obtain exact proportionality between process fluid flow rate and the quantity of plastic material drawn from the hoppers. The exact proportionality between the fluid flow rate and the quantity of material drawn, which is the fundamental condition to be met in order to obtain minimum consumption with the same degree of dehumidification, can in fact be achieved only if:
   a) the system measures and/or records the quantity of material consumed/delivered by the processing machine/feeding machine;
   b) the quantity of air introduced by the process fluid generator depends on the above mentioned quantity of material consumed.

In other words, the process fluid generator doesn't behave like a self-regulating system that tends to reach a variable set point value of the process fluid flow rate, exactly proportional to the quantity of plastic material drawn from the drying hopper, which is variable, too.

For example, if in a given time interval the actual quantity of air circulating in the dehumidification circuit is higher than the value set by partializing the adjusting means, energy consumption will be higher due to the heating/dehumidification of a larger quantity of air than necessary. This condition may also give origin to a permanent degradation of the chemical-physical characteristics of the plastic material.

If, on the other hand, the actual quantity of air is lower than the value set by partializing the adjusting means, it may be impossible to guarantee the temperature and humidity conditions set by the operator.

As is evident to any expert in the field of dehumidification of plastic granules, the above observations, substantially made for a system with a single hopper, are valid also for more complex multi-hopper systems, in which several hoppers are connected in parallel to the generator of process fluid.

Similarly to what has been pointed out for systems with a single hopper, some possible causes of permanent degradation of the chemical-physical characteristics of the plastic granules and of abnormal energy consumption are listed here below:
a) inability of the control system of a multi-hopper dehumidifier to measure or acquire, for example, from the plastic material transport system and/or from the processing machine, the variable quantity of plastic material drawn per unit of time for each dehumidification hopper;
b) inability of the control system of the dehumidifier to measure and control with precision the quantity of air introduced in each single hopper in operation so that it is exactly proportional to the quantity of material drawn per unit of time and specific for that hopper;
c) inability of the process fluid generator to measure and control with precision at any moment the quantity of air according to the sum of the individual quantities necessary for all the hoppers.

The inability to precisely adjust, at any moment, the actual quantity of process fluid introduced in every single hopper causes the system to fail to respect the conditions of minimum energy absorption, since it isn't possible to obtain exact proportionality between the process fluid flow rate in each hopper and the quantities of plastic material drawn from the corresponding hoppers. The exact proportionality between fluid flow rate and quantity of material drawn (which is the fundamental condition to be met in order to obtain minimum consumption) can in fact be achieved if:
a) the system measures and/or records the quantity of material consumed/delivered by the processing machine/feeding machine connected to each hopper;
b) the quantity of process air introduced in each hopper depends on the corresponding quantity of material drawn from the relative hoppers. In other words, the process fluid generator and the set of on-off and adjusting valves present in each hopper should constitute a self-regulating system that tends to reach several variable set point values of process fluid flow rate that are exactly proportional to the quantities of plastic material drawn from each drying hopper, which are variable, too.

A further limitation of the present state of the art is connected to the inability of the process fluid generator to measure and control exactly the quantity of fluid introduced in the dehumidification circuit following sudden closing and/or opening of the on-off valves of the single hoppers. Said abrupt variation in the operating conditions, typical of a multi-hopper dehumidification system, can cause strong pressure variations inside the closed circuit, which lead to the introduction of excessive quantities of process fluid into the circuit itself, with consequent increase in energy consumption and the risk of permanently degrading the chemical-physical properties of the plastic material.

DE29621313U discloses a device for drying granular material. The device comprises a drying air generator and hoppers for containing the granular material; according to the peamble of claim 1.

In order to overcome the drawbacks described above, a new high energy efficiency system for dehumidifying and/or drying plastic or similar materials, equipped with an electronic unit for controlling the process parameters, has been conceived.

The main object of the present invention is to optimise energy consumption while at the same time maximising the efficiency of the system, by measuring, acquiring and controlling the parameters that are typical of the process.

In particular, the present invention consists of a control system for a dehumidifier capable of measuring and adjusting with maximum precision the quantities of process fluid introduced in each drying hopper to a degree exactly proportional to the quantity of material drawn that is specific to each hopper, in order to minimise energy consumption.

In particular, the present invention is a control system for a dehumidifier capable of measuring and/or acquiring the quantity of plastic material draw/delivered from/to each hopper by the processing/feeding machines.

Said data is fundamental in order to obtain exact proportionality between the process fluid flow rates and the quantities of material draw/delivered from/to the corresponding hoppers in order to minimise energy consumption.

Another important object of the invention is to provide a dehumidification/drying system that operates in a quick and flexible manner in accordance with the operating conditions, modulating the process parameters also according to the number of hoppers actually used in each specific dehumidification and/or drying cycle. The process fluid generator that is the subject of the present invention is capable of measuring and controlling exactly the quantity of fluid introduced in the dehumidification circuit even following sudden closing and/or opening of the on-off valves of the single hoppers. In this way the control system of the invention can eliminate the consequent pressure variations inside the closed circuit, thus avoiding the introduction of excessive quantities of process fluid into the circuit itself, which would lead to an increase in energy consumption and to the possible degradation of the chemical-physical properties of the plastic material.

Another object of the present invention is to guarantee that the plastic material taken from the hoppers and conveyed to the successive processing stages is adequately dehumidified and/or dried according to the type of plastic material and to the type of processing to be carried out.

These and other direct and complementary objects are achieved by the new high energy efficiency system for dehumidifying plastic or similar materials according to claim 1, equipped with suitable sensors, for example load cells, capable of measuring the quantity of plastic material drawn/delivered from/to the single hoppers by the processing/feeding machines and provided with units for measuring and controlling the process fluid flow rate.

This controlling action is carried out by means of the process fluid generator and the set of on-off and adjusting valves present in each hopper that, connected to a control unit, operate as a self-regulating system that tends to reach the variable set point values of the process fluid flow rate so that the process fluid flow rates in each hopper is exactly proportional to the quantities of plastic material drawn from each drying hopper, which are variable, too.

Instead of using load cells, generally coupled with the drying hoppers, to be used to measure the quantity of plastic material consumed/delivered by the processing/feeding machines, the control system can also receive/acquire said information via connection, preferably electrical and/or optical, to the processing/feeding machines.

According to the invention, furthermore, the new system may also comprise one or more heating chambers, of the electric and/or thermodynamic and/or fuel-operated or other type, suited to increase the temperature of the dried and/or dehumidified process fluid where necessary, said chambers being preferably positioned between said generator and said hoppers. Furthermore, the new system may also comprise sensors for measuring/recording process parameters like: temperature of the process fluid flowing in and/or out of each one of said hoppers, temperature of the plastic material drawn from said hopper, dew point of said process fluid flowing in and/or out of each one of said hoppers.

In the preferred embodiment of the invention, said process fluid is dried and/or dehumidified air, for example through a chemical and/or thermodynamic and/or mechanical or other process.

In the preferred embodiment of the invention, said circuit of the process fluid comprises ducts, pumps and valves and connects said generator to each one of said hoppers, in turn preferably connected in parallel.

Said circuit is closed, which means that the process fluid is recirculated in the generator and reused after regeneration.

In the preferred embodiment of the invention, said electronic control unit of the new dehumidification system comprises one or more microprocessor boards and/or one or more PCs or similar equipment and/or one or more PLCs, connected to one or more actuators and/or sensors that measure the typical parameters of the system, for example temperature, dew point, ecc., relative to each hopper and, according to said parameters, adjusts the quantities of process fluid introduced in the hoppers, wherein the quantities of process air introduced in the hoppers must depend on the quantities of material drawn from said hoppers.

In other words, the electronic control unit that controls the process fluid generator and the set of on-off and adjusting valves present in each hopper operates as a self-regulating system that continuously determines several variable set point values of the process fluid flow rate that are exactly proportional to the quantities of plastic material consumed, which are variable, too, measured in the single drying hoppers by measuring devices like load cells.

Furthermore, said control unit implements a self-regulating system that tends to reach several variable set point values of the process fluid flow rate that are exactly proportional to the quantities of plastic material consumed, if necessary also according to parameters put in by the operator and/or taken by said sensors, for example temperature, dew point, ecc., and/or calculated on the basis of the data previously taken and stored.

Furthermore, according to the invention, the operator can manually modify the data input in said control unit of the dehumidification system, in order to set the values of said process parameters according to the operating needs. Furthermore, said process fluid circuit may comprise a bypass suited to compensate for the excessive pressures that can be generated in the system, for example following the sudden closing/opening of one or more hoppers, by closing/opening one or more valves of said circuit, or by switching on/off one or more ventilation devices.

Said bypass also serves to compensate for any excessive pressures due to an oversized process fluid generator, for example in the case where the system is operated with a lower number of hoppers than the optimal number, with the intention to use more hoppers successively.

The attached drawing shows, by way of non-limiting example, a practical embodiment of the invention.

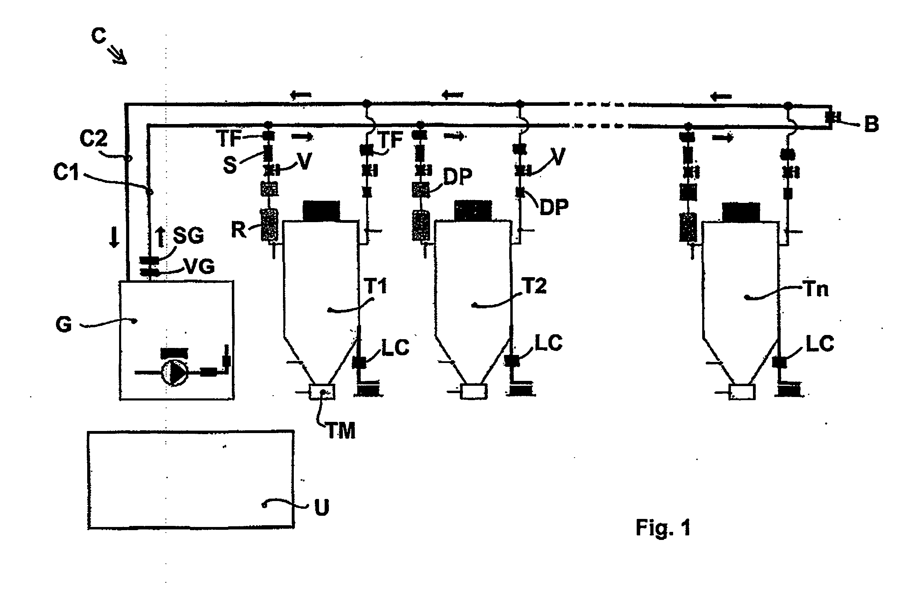

Figure 1 shows a diagram of the new system.

The new dehumidification and/or drying system for plastic and similar materials comprises:
- at least one generator (G) of dried and/or dehumidified process fluid, preferably air, provided with at least one member (VG) for adjusting the flow rate of the outflowing fluid;
- one or more hoppers (T1, T2, ..., Tn) containing the plastic material (P) to be dried and/or dehumidified, inside which said process fluid is introduced;
- a circuit (C) for the circulation of the process fluid, connecting said generator (G) to said hoppers (T1, T2, ..., Tn), and wherein said hoppers (T1, T2, ..., Tn) are connected in parallel, said circuit (C) being preferably closed, that is, comprising at least one inlet or delivery section (C1) and at least one return section (C2) for the process fluid, which is then recirculated in the generator (G) and reused;

- a plurality of on-off and/or adjusting valves (V) for modulating the flow rate of process fluid to each hopper (T);
- at least one electronic control unit (U) comprising one or more microprocessor boards and/or one or more PCs or similar equipment and/or one or more PLCs;
- a plurality of sensors/systems for measuring the flow rate (S) of process fluid to each hopper (T);
- a plurality of devices for measuring the flow rate/quantity of material to be dehumidified that is drawn/delivered from/to each hopper (T), said devices comprising for example weighing sensors (LC) and/or load cells.

Furthermore, the new dehumidification and/or drying system for plastic and similar materials may comprise:
- one or more flow rate sensors (SG) for the process fluid flowing out of the generator (G), applied to said inlet duct (C1);
- one or more temperature sensors (TF) for measuring the temperature of the process fluid conveyed into the ducts (D1) and/or taken from the ducts (D2) of each drying hopper (T);
- one or more temperature sensors (TM) for measuring the temperature of the plastic material conveyed into and/or taken from each hopper (T);
- one or more dew point sensors (DP) for measuring the degree of humidity of the process fluid conveyed into the ducts (D1) and/or taken from the ducts (D2) of each hopper (T);
- one or more bypass valves (B) suited to compensate for the excessive pressures that may be generated in the system.

Said electronic control unit (U) of the new dehumidification system is connected to one or more of said on-off and/or adjusting valves (V) and/or to one or more of said sensors (S, LC, DP, TF, TM) of the typical parameters of the system relating to each one of said hoppers (T1, T2, ..., Tn) and, according to the values of said parameters, precisely adjusts, through said valves (V), the flow rate of the process fluid introduced in each one of said hoppers (T1, T2, ..., Tn).

Furthermore, said electronic control unit (U) controls said generator (G), said valves (V), said plurality of sensors/systems for measuring the flow rate (S) and said plurality of weighing sensors (LC) relating to each hopper (T), thus implementing a self-regulating system that tends to reach several variable set point values of the process fluid flow rate that are exactly proportional to the quantities plastic material consumed, in order to precisely adjust the flow rate of the process fluid flowing into each one of said hoppers (T1, T2, ..., Tn), according to the quantity/ flow rate of material drawn/delivered from/to each one of said hoppers and/or according to one or more process parameters measured by said sensors (DP) and/or (TM) and/or (TF) and/or to programmed and/or calculated values.

In the preferred embodiment of the invention, said hoppers (T1, T2, ..., Tn) are connected in parallel in said circuit (C) between said delivery section (C1) and said return section (C2), that is, each hopper (T1, T2, ..., Tn) is connected to said delivery section (C1) through a process fluid inlet duct (D1) and to said return section (C2) via an outlet duct (D2).

Said inlet ducts and said outlet ducts of each one of said hoppers (T1, T2, ..., Tn) comprise powered on-off and/or adjusting valves (V) suited to allow or interrupt delivery or discharge of the process fluid.

According to the invention, the new system may also comprise one or more heating chambers (R), of the electric and/or thermodynamic and/or fuel-operated or other type, suited to increase the temperature of the dried and/or dehumidified process fluid, said chambers (R) being preferably positioned between said generator (G) and each one of said hoppers (T1, T2, ...Tn), connected for example to said ducts that convey the process fluid into each hopper (T1, T2, ...Tn).

Therefore, with reference to the above description and the attached drawings, the following claims are expressed.

## Claims

1. System for dehumidifying and/or drying plastic materials, comprising at least one generator (G) of dried and/or dehumidified process fluid, one or more hoppers (T1, T2, ..., Tn) containing the plastic material (P) to be dried and/or dehumidified, inside which said process fluid is introduced, a circuit (C) for the circulation of the process fluid connecting said generator (G) to said hoppers (T1, T2, ..., Tn), one or more on-off and/or adjusting valves (V) for modulating the flow rate of process fluid to each one of said hoppers (T1, T2, ..., Tn), one or more sensors and/or devices (S) for measuring the flow rate of process fluid to each one of said hoppers (T1, T2, ... , Tn), one or more devices (LC) for measuring the quantity of material to be dehumidified drawn and/or delivered from/to each hopper (T), at least one electronic control unit (U) connected to said generator (G) and/or to one or more of said valves (V) and/or to one or more of said sensors and/or devices (S) for measuring the flow rate of process fluid and/or to one or more of said devices (LC) for measuring the quantity of material to be dehumidified drawn and/or delivered from/to each hopper (T1, T2, ... , Tn), wherein said control unit (U) modulates the flow rate of process fluid flowing out of said generator (G) and/or flowing into one or more of said hoppers (T1, T2, ..., Tn), according to said quantities of material to be dehumidified, drawn and/or delivered from/to the corresponding hopper (T1, T2, ..., Tn) and wherein said circuit (C) of the process fluid is closed and comprises at least one delivery section (C1) of the process fluid from said generator (G) to said hoppers (T1, T2, ..., Tn) and at least one return section (C2) of the process fluid from said hoppers (T1, T2, ..., Tn) to said generator (G), each hopper (T1, T2, ..., Tn) being connected to said delivery section (C1) through a process fluid inlet duct (D1) and to said return section (C2) through an outlet duct (D2), said inlet ducts of each one of said hoppers (T1, T2, ..., Tn) comprise on-off valves (V) suited to allow or interrupt delivery of the process fluid, and it comprises at least one sensor of the temperature of the plastic material drawn from each hopper (T1, T2, ..., Tn) **characterised in that** said outlet ducts of each one of said hoppers (T1,T2,...T4) comprise on-off valves (V) suited to allow or interrupt discharge or the process fluid and **in that** it comprises at least one sensor of the temperature of the process fluid flowing into each hopper (T1, T2, ..., Tn) and at least one sensor of the temperature of the process fluid flowing out of each hopper (T1, T2, ..., Tn), in such a way as to determine the temperature variation between the process fluid flowing in and the process fluid flowing out of each hopper (T1, T2, ..., Tn) in order to reduce energy consumption.

2. System according to claim 1, wherein said control unit (U) adjusts the flow rate of said process fluid so that it is exactly proportional to the quantity of consumed material that is specific to each one of said hoppers (T1, T2, ..., Tn), in order to minimise energy consumption.

3. System according to claim 1 or 2, wherein said devices (LC) for measuring the quantity of material to be dehumidified drawn and/or delivered from/to each one of said hoppers (T1, T2, ..., Tn) comprise weighing devices (LC).

4. System according to claim 1 or 2, wherein it comprises devices (LC) properly connected to the processing/feeding machines of said hoppers (T1, T2, ..., Tn) and suited to measure the quantity of material to be dehumidified drawn and/or delivered from/to each one of said hoppers (T1, T2, ..., Tn).

5. System according to any preceding claim, wherein said electronic control unit (U) comprises one or more microprocessor boards, and/or one or more PCs or similar equipment, and/or one or more PLCs, connected to one or more actuators and/or sensors that measure said process parameters relative to each one of said hoppers (T1, T2, ..., Tn) and, according to said parameters, modulate the flow rate of process fluid introduced in each one of said hoppers (T1,T2,... , Tn).

6. System according to any preceding claim, wherein said process parameters that are measured and/or programmed are the following: temperature of the process fluid flowing in and/or out of each one of said hoppers and/or temperature of the plastic material drawn from each one of said hoppers and/or quantity and type of material contained in each one of said hoppers and/or dew point of said process fluid flowing in and/or out of each one of said hoppers.

7. System according to any preceding claim, wherein said process fluid is air that has been dried and/or dehumidified for example through a chemical and/or thermodynamic and/or mechanical or other process.

8. System according to any preceding claim, wherein said hoppers (T1, T2, ..., Tn) are connected in parallel in said circuit (C) between said delivery section (C1) and said return section (C2), that is, each hopper (T1, T2, ..., Tn) is connected to said delivery section (C1) through a process fluid inlet duct (D1) and to said return duct (C2) via an outlet duct (D2).

9. System according to any preceding claim, wherein it comprises at least one sensor of the dew point value of the process fluid flowing into each hopper (T1, T2, ..., Tn), connected to each inlet duct (D1), and at least one sensor of the dew point value of the process fluid flowing out of each hopper (T1, T2, ..., Tn), connected to each outlet duct (D2), in such a way as to determine the variation between the humidity content of the process fluid flowing in and the humidity content of the process fluid flowing out of each hopper (T1, T2, ..., Tn), in order to reduce energy consumption and the duration of the dehumidification process.

10. System according to any preceding claim, wherein said process fluid circuit preferably comprises also at least one bypass (B) suited to compensate for the excessive pressures generated in the system.

11. System according to any preceding claim, wherein it comprises one or more heating chambers (R), of the electrical and/or thermodynamic and/or fuel-operated or other type, suited to increase the temperature of the dried and/or dehumidified process fluid, each one of said chambers (R) being positioned on each one of said inlet ducts (D1) between said generator (G) and the corresponding hopper (TI, T2, ..., Tn).

## Patentansprüche

1. System zum Entfeuchten und/oder Trocknen von Kunststoffmaterialien mit mindestens einem Generator (G) für getrocknetes und/oder entfeuchtetes Prozessfluid, einem oder mehreren Trichtern (T1, T2, ..., Tn), die das zu trocknende und/oder zu entfeuchtende Kunststoffmaterial (P) enthalten, in die das Prozessfluid eingeführt wird, einem Kreislauf (C) für die Zirkulation des Prozessfluids, der den Generator (G) mit den Trichtern (T1, T2, ..., Tn) verbindet, einem oder mehreren Ein/Aus- und/oder Einstellventilen (V) zum Modulieren der Durchflussrate des Prozessfluids zu jedem der Trichter (T1, T2, ..., Tn), einem oder mehreren Sensoren und/oder Vorrichtungen (S) zum Messen der Durchflussrate des Prozessfluids zu jedem der Trichter (T1, T2, ..., Tn), einer oder mehreren Vorrichtungen (LC) zum Messen der Menge an zu entfeuchtendem Material, das von/zu jedem Trichter (T) entnommen und/oder zugeführt wird, mindestens einer elektronischen Steuereinheit (U), die mit dem Generator (G) und/oder mit einem oder mehreren der Ventile (V) und/oder mit einem oder mehreren der Sensoren und/oder Vorrichtungen (S) zum Messen der Durchflussrate des Prozessfluids und/oder mit einer oder mehreren der Vorrichtungen (LC) zum Messen der Menge an zu entfeuchtendem Material, das von/zu jedem Trichter (T1, T2, ..., Tn) entnommen und/oder zugeführt wird, verbunden ist, wobei die Steuereinheit (U) die Durchflussrate des Prozessfluids, das aus dem Generator (G) strömt und/oder in einen oder mehrere der Trichter (T1, T2, ..., Tn) strömt, gemäß den Mengen an zu entfeuchtendem Material, das von/zu dem entsprechenden Trichter (T1, T2, ..., Tn) entnommen und/oder zugeführt wird, moduliert, und wobei der Kreislauf (C) des Prozessfluids geschlossen ist und mindestens einen Zuführungsabschnitt (C1) des Prozessfluids vom Generator (G) zu den Trichtern (T1, T2, ..., Tn) und mindestens einen Rückführungsabschnitt (C2) des Prozessfluids von den Trichtern (T1, T2, ..., Tn) zum Generator (G) umfasst, wobei jeder Trichter (T1, T2, ..., Tn) mit dem Zuführungsabschnitt (C1) durch einen Prozessfluid-Einlasskanal (D1) und mit dem Rückführungsabschnitt (C2) durch einen Auslasskanal (D2) verbunden ist, wobei die Einlasskanäle von jedem der Trichter (T1, T2, ..., Tn) Ein/Aus-Ventile (V) umfassen, die geeignet sind, um die Zuführung des Prozessfluids zu ermöglichen oder zu unterbrechen, und es mindestens einen Sensor für die Temperatur des von jedem Trichter (T1, T2, ..., Tn) entnommenen Kunststoffmaterials umfasst, **dadurch gekennzeichnet, dass** die Auslasskanäle von jedem der Trichter (T1, T2, ..., Tn) Ein/Aus-Ventile (V) umfassen, die geeignet sind, um den Auslass des Prozessfluids zu ermöglichen oder zu unterbrechen, und dass es mindestens einen Sensor für die Temperatur des Prozessfluids, das in jeden Trichter (T1, T2, ..., Tn) strömt, und mindestens einen Sensor für die Temperatur des Prozessfluids, das aus jedem Trichter (T1, T2, ..., Tn) strömt, in einer solchen Weise umfasst, dass die Temperaturveränderung zwischen dem Prozessfluid, das in jeden Trichter (T1, T2, ..., Tn) strömt, und dem Prozessfluid, das aus jedem Trichter (T1, T2, ..., Tn) strömt, bestimmt wird, um den Energieverbrauch zu verringern.

2. System nach Anspruch 1, wobei die Steuereinheit (U) die Durchflussrate des Prozessfluids so einstellt, dass sie zur Menge an verbrauchtem Material exakt proportional ist, die für jeden der Trichter (T1, T2, ..., Tn) spezifisch ist, um den Energieverbrauch zu minimieren.

3. System nach Anspruch 1 oder 2, wobei die Vorrichtungen (LC) zum Messen der Menge an zu entfeuchtendem Material, das von/zu jedem der Trichter (T1, T2, ..., Tn) entnommen und/oder zugeführt wird, Wiegevorrichtungen (LC) umfassen.

4. System nach Anspruch 1 oder 2, wobei es Vorrichtungen (LC) umfasst, die zweckmäßig mit den Verarbeitungs-/Einspeisemaschinen der Trichter (T1, T2, ..., Tn) verbunden sind und geeignet sind, um die Menge des zu entfeuchtenden Materials, das von/zu jedem der Trichter (T1, T2, ..., Tn) entnommen und/oder zugeführt wird, zu messen.

5. System nach einem vorangehenden Anspruch, wobei die elektronische Steuereinheit (U) eine oder mehrere Mikroprozessorplatinen und/oder einen oder mehrere PCs oder eine ähnliche Ausrüstung und/oder eine oder mehrere PLCs, die mit einem oder mehreren Aktuatoren und/oder Sensoren verbunden sind, die die Prozessparameter relativ zu jedem der Trichter (T1, T2, ..., Tn) messen und gemäß den Parametern die Durchflussrate des Prozessfluids modulieren, das in jeden der Trichter (T1, T2, ..., Tn) eingeführt wird, umfasst.

6. System nach einem vorangehenden Anspruch, wobei die Prozessparameter, die gemessen und/oder programmiert werden, die Folgenden sind: die Temperatur des Prozessfluids, das in jeden und/oder aus jedem der Trichter strömt, und/oder die Temperatur des von jedem der Trichter entnommenen Kunststoffmaterials und/oder die Menge und die Art des in jedem der Trichter enthaltenen Materials und/oder der Taupunkt des Prozessfluids, das in jeden und/oder aus jedem der Trichter strömt.

7. System nach einem vorangehenden Anspruch, wobei das Prozessfluid Luft ist, die beispielsweise durch einen chemischen und/oder thermodynamischen und/oder mechanischen oder anderen Prozess getrocknet und/oder entfeuchtet wurde.

8. System nach einem vorangehenden Anspruch, wobei die Trichter (T1, T2, ..., Tn) in dem Kreislauf (C) zwischen dem Zuführungsabschnitt (C1) und dem Rückführungsabschnitt (C2) parallel geschaltet sind, das heißt jeder Trichter (T1, T2, ..., Tn) mit dem Zuführungsabschnitt (C1) durch einen Prozessfluid-Einlasskanal (D1) und mit dem Rückführungskanal (C2) über einen Auslasskanal (D2) verbunden ist.

9. System nach einem vorangehenden Anspruch, wobei es mindestens einen Sensor für den Taupunktwert des Prozessfluids, das in jeden Trichter (T1, T2, ..., Tn) strömt, der mit jedem Einlasskanal (D1) verbunden ist, und mindestens einen Sensor für den Taupunktwert des Prozessfluids, das aus jedem Trichter (T1, T2, ..., Tn) strömt, der mit jedem Auslasskanal (D2) verbunden ist, in einer solchen Weise umfasst, dass die Veränderung zwischen dem Feuchtigkeitsgehalt des Prozessfluids, das in jeden Trichter (T1, T2, ..., Tn) strömt, und dem Feuchtigkeitsgehalt des Prozessfluids, das aus jedem Trichter (T1, T2, ..., Tn) strömt, bestimmt wird, um den Energieverbrauch und die Dauer des Entfeuchtungsprozesses zu verringern.

10. System nach einem vorangehenden Anspruch, wobei der Prozessfluidkreislauf vorzugsweise auch mindestens eine Umleitung (B) umfasst, die geeignet ist, um die übermäßigen Drücke, die im System erzeugt werden, zu kompensieren.

11. System nach einem vorangehenden Anspruch, wobei es eine oder mehrere Heizkammern (R) des elektrischen und/oder thermodynamischen und/oder mit Brennstoff betriebenen oder anderen Typs umfasst, die geeignet sind, um die Temperatur des getrockneten und/oder entfeuchteten Prozessfluids zu erhöhen, wobei jede der Kammern (R) an jedem der Einlasskanäle (D1) zwischen dem Generator (G) und dem entsprechenden Trichter (T1, T2, ..., Tn) angeordnet ist.

## Revendications

1. Système pour déshumidifier et/ou sécher des matières plastiques, comprenant au moins un générateur (G) de fluide de traitement séché et/ou déshumidifié, une ou plusieurs trémies (T1, T2, ..., Tn) contenant la matière plastique (P) à sécher et/ou déshumidifier à l'intérieur desquelles ledit fluide de traitement est introduit, un circuit (C) pour la circulation du fluide de traitement reliant ledit générateur (G) auxdites trémies (T1, T2, ..., Tn), une ou plusieurs vannes de marche-arrêt et/ou de réglage (V) pour moduler le débit de fluide de traitement vers chacune desdites trémies (T1, T2, ..., Tn), un ou plusieurs capteurs et/ou dispositifs (S) pour mesurer le débit de fluide de traitement vers chacune desdites trémies (T1, T2, ..., Tn), un ou plusieurs dispositifs (LC) pour mesurer la quantité de matière à déshumidifier extraite de chaque trémie et/ou acheminée à chaque trémie (T1, T2, ..., Tn), au moins une unité de commande électronique (U) reliée audit générateur (G) et/ou à une ou plusieurs desdites vannes (V) et/ou à un ou plusieurs desdits capteurs et/ou dispositifs (S) pour mesurer le débit de fluide de traitement et/ou à un ou plusieurs desdits dispositifs (LC) pour mesurer la quantité de matière à déshumidifier extraite de chaque trémie et/ou acheminée à chaque trémie (T1, T2, ..., Tn), dans lequel ladite unité de commande (U) module le débit de fluide de traitement s'écoulant à l'extérieur dudit générateur (G) et/ou s'écoulant dans une ou plusieurs desdites trémies (T1, T2, ..., Tn) en fonction desdites quantités de matière à déshumidifier extraite de chaque trémie et/ou acheminée à la trémie (T1, T2, ..., Tn) correspondante et dans lequel ledit circuit (C) de fluide de traitement est fermé et comprend au moins un tronçon d'acheminement (C1) du fluide de traitement dudit générateur (G) auxdites trémies (T1, T2, ..., Tn) et au moins un tronçon de retour (C2) du fluide de traitement desdites trémies (T1, T2, ..., Tn) audit générateur (G), chaque trémie (T1, T2, ..., Tn) étant reliée audit tronçon d'acheminement (C1) par une conduite d'entrée de fluide de traitement (D1) et audit tronçon de retour (C2) par une conduite de sortie (D2), lesdites conduites d'entrée de chacune desdites trémies (T1, T2, ..., Tn) comprennent des vannes de marche-arrêt (V) adaptées pour permettre l'acheminement du fluide de traitement ou interrompre celui-ci, et il comprend au moins un capteur de la température de la matière plastique extraite de chaque trémie (T1, T2, ..., Tn), **caractérisé en ce que** lesdites conduites de sortie de chacune desdites trémies (T1, T2, ..., Tn) comprennent des vannes de marche-arrêt (V) adaptées pour permettre l'évacuation du fluide de traitement ou interrompre celui-ci et **en ce qu'**il comprend au moins un capteur de la température du fluide de traitement s'écoulant dans chaque trémie (T1, T2, ..., Tn) et au moins un capteur de la température du fluide de traitement s'écoulant à l'extérieur de chaque trémie (T1, T2, ..., Tn) de manière à déterminer la variation de température entre le fluide de traitement s'écoulant dans chaque trémie (T1, T2, ..., Tn) et le fluide de traitement s'écoulant à l'extérieur de celle-ci afin de réduire la consommation d'énergie.

2. Système selon la revendication 1, dans lequel ladite unité de commande (U) règle le débit dudit fluide de traitement de sorte qu'il soit exactement proportionnel à la quantité de matière consommée qui est spécifique à chacune desdites trémies (T1, T2, ..., Tn), afin de minimiser la consommation d'énergie.

3. Système selon la revendication 1 ou 2, dans lequel lesdits dispositifs (LC) pour mesurer la quantité de matière à déshumidifier, extraite de chaque trémie et/ou acheminée à chacune desdites trémies (T1, T2, ..., Tn) comprennent des dispositifs de pesage (LC).

4. Système selon la revendication 1 ou 2, dans lequel il comprend des dispositifs (LC) reliés de manière appropriée aux machines de traitement/d'alimentation desdites trémies (T1, T2, ..., Tn) et adaptés pour mesurer la quantité de matière à déshumidifier, extraite de chaque trémie et/ ou acheminée à chacune desdites trémies (T1, T2, ..., Tn).

5. Système selon l'une quelconque des revendications précédentes, dans lequel ladite unité de commande électronique (U) comprend une ou plusieurs cartes à microprocesseur, et/ou un ou plusieurs PC ou équipements similaires, et/ou un ou plusieurs PLC, reliés à un ou plusieurs actionneurs et/ou capteurs qui mesurent lesdits paramètres de traitement se rapportant à chacune desdites trémies (T1, T2, ..., Tn) et, en fonction desdits paramètres, modulent le débit de fluide de traitement introduit dans chacune desdites trémies (T1, T2, ..., Tn).

6. Système selon l'une quelconque des revendications précédentes, dans lequel lesdits paramètres de traitement qui sont mesurés et/ou programmés sont les suivants : température du fluide de traitement s'écoulant dans et/ou à l'extérieur de chacune desdites trémies et/ou température de la matière plastique extraite de chacune desdites trémies et/ou quantité et type de matière contenue dans chacune desdites trémies et/ou point de rosée dudit fluide de traitement s'écoulant dans et/ou à l'extérieur de chacune desdites trémies.

7. Système selon l'une quelconque des revendications précédentes, dans lequel ledit fluide de traitement est de l'air qui a été séché et/ou déshumidifié par exemple par un processus chimique et/ou thermodynamique et/ou mécanique ou autre.

8. Système selon l'une quelconque des revendications précédentes, dans lequel lesdites trémies (T1, T2, ..., Tn) sont reliées en parallèle dans ledit circuit (C) entre ledit tronçon d'acheminement (C1) et ledit tronçon de retour (C2), c'est-à-dire que chaque trémie (T1, T2, ..., Tn) est reliée audit tronçon d'acheminement (C1) par une conduite d'entrée de fluide de traitement (D1) et audit tronçon de retour (C2) par une conduite de sortie (D2).

9. Système selon l'une quelconque des revendications précédentes, dans lequel il comprend au moins un capteur de la valeur de point de rosée du fluide de traitement s'écoulant dans chaque trémie (T1, T2, ..., Tn), relié à chaque conduite d'entrée (D1), et au moins un capteur de la valeur de point de rosée du fluide de traitement s'écoulant à l'extérieur de chaque trémie (T1, T2, ..., Tn), relié à chaque conduite de sortie (D2), de manière à déterminer la variation entre la teneur en humidité du fluide de traitement s'écoulant dans chaque trémie (T1, T2, ..., Tn) et la teneur en humidité du fluide de traitement s'écoulant à l'extérieur de celle-ci, afin de réduire la consommation d'énergie et la durée du processus de déshumidification.

10. Système selon l'une quelconque des revendications précédentes, dans lequel ledit circuit de fluide de traitement comprend de préférence également au moins une dérivation (B) adaptée pour compenser les pressions excessives générées dans le système.

11. Système selon l'une quelconque des revendications précédentes, dans lequel il comprend une ou plusieurs chambres de chauffage (R) du type électrique et/ou thermodynamique et/ou commandé par un combustible ou autre, adaptées pour augmenter la température du fluide de traitement séché et/ou déshumidifié, chacune desdites chambres (R) étant positionnée sur chacune desdites conduites d'entrée (D1) entre ledit générateur (G) et la trémie correspondante (T1, T2, ..., Tn).
